# EUROPEAN PATENT APPLICATION

(11) **EP 4 180 771 A1**
(43) Date of publication of application: **17.05.2023**
(21) Application number: 22207123.5
(22) Date of filing: 14.11.2022
(51) Int. Cl.: G01C 23/00, G06V 30/14, G08G 5/00, G08G 5/06

(54) **SYSTEM AND METHOD FOR ENHANCING SITUATIONAL AWARENESS VIA PANEL SELECTOR DISPLAY WHILE VIEWING MULTIPANEL MAP-BASED CHARTS**

(30) Priority: 12.11.2021 US 202117525130; 12.11.2021 US 202163278576 P
(71) Applicant: Rockwell Collins, Inc., Cedar Rapids, IA 52498 (US)
(72) Inventor: PETERS, Kyle R., Ely,Iowa (US); HENRY, Jeff M., Cedar Rapids,Iowa (US)
(74) Representative: Dehns

(57) **Abstract**

An aircraft-based or vehicle-based system and method for enhancing situational awareness via a display system for displaying map-based charts (e.g., terminal charts, enroute charts, avionics charts) displays an active map-based chart (specifically an active panel of the map-based chart) and superimposes over the displayed active panel a panel selector display, e.g., a thumbnail display of the active enroute chart with a subset of the information provided by the enroute chart and divided into its component panels. The panel selector display highlights the currently displayed active panel and provides an ownship indicator showing the approximate position of the aircraft or vehicle relative to the currently active enroute chart.

## Description

### BACKGROUND

Aeronautical charts are an essential navigational reference for pilots, traditionally propagated as foldable paper charts. For example, terminal charts provide navigational reference for pilots operating under Visual Flight Rules (VFR) and provide geographical information (e.g., landmarks, populated places, facilities, terrain elevations, natural features, airspace boundaries) as well as operating information (e.g., approach/departure procedures) for the Class B airspace surrounding major airports. Increasingly, terminal charts are being displayed electronically, e.g., via electronic flight bags (EFB) or other like cockpit display devices. Similarly, enroute charts eschew visual landmarks and terrain features for details about fixes and beacons; waypoints and airways; minimum altitudes; and other navigational/radionavigational aids between airports.

Pilots may gain valuable navigational information from terminal and enroute charts, but while viewing these charts via chart display applications they may lose situational awareness. For example, enroute charts may be massive in scale, such that it may be impossible to display an entire enroute chart all at once and access the geographical and navigational information contained therein to any acceptable level of detail. However, by splitting an enroute chart into a sequence of component panels and displaying one panel at a time, the pilot may not be able to easily determine which panel or part of a chart they are looking at relative to the chart as a whole (or relative to their own position). Similarly, chart display applications may not be designed for enroute charts and may not be able to easily or intuitively move between panels within a chart.

In a similar vein, motorists navigating unfamiliar roads or areas via a moving map display (e.g., where the displayed maps or charts have been converted from highway maps or other physical maps) may focus the displayed maps to a high level of detail corresponding to their immediate vicinity. While this may provide the motorist with a high level of situational awareness with respect to a small area immediately proximate to the vehicle, the motorist may have little if any situational awareness with respect to surrounding neighborhoods, suburbs, urban areas, or localities which may also hold important spatial relationships to the vehicle's current or future position.

### SUMMARY

In a first aspect, a display system based in an aircraft or other vehicle for displaying enroute charts, avionics charts, or other map-based charts is disclosed. In embodiments, the display system includes a display unit capable of receiving position information of the aircraft or vehicle and of receiving control input from a pilot, operator, or other user of the display system. The display unit presents, in a primary display, an active panel of an enroute chart, avionics chart, or other map-based chart comprising a sequence of component panels and a geographical information set (e.g., each panel representing a portion of the chart). The primary display includes a panel selector toggle for activating or deactivating (e.g., toggling on or off) a panel selection display superimposed over the primary display when activated. The panel selector display includes a thumbnail display of the full active chart (e.g., superimposed over a currently displayed panel of the active chart). The thumbnail display includes dividers indicating the division of the active chart into its component panels, an indicator of the currently displayed active panel, and an ownship indicator showing the position of the aircraft or vehicle relative to the active chart.

In some embodiments, the panel selector display (thumbnail display) may be positioned by the user relative to the active chart.

In some embodiments, the panel selector display includes a cursor providing for selection of a component panel by the user from within the thumbnail display, and an indicator for showing that a panel has been selected.

In some embodiments, in response to the selection of a panel, the display system designates the selected panel as the new active panel and displays the selected new active panel.

In some embodiments, the ownship indicator is an icon showing the approximate position of the aircraft or vehicle relative to the active chart.

In some embodiments, the ownship position cannot be shown within the thumbnail display (e.g., the aircraft or vehicle is not in the area corresponding to the active chart) and the ownship icon shows the relationship between the aircraft or vehicle position and the active chart via one or more of 1) an icon "parked" on an edge of the active chart corresponding to the approximate relative position of the aircraft or vehicle or 2) an icon shaded, colored, or otherwise presented to indicate the position of the aircraft or vehicle outside the current active chart.

In some embodiments, the display system rotates the primary display and panel selector display in response to control input received from the user (e.g., the panel selector display moving in unison with the primary display).

In a further aspect, a method for providing situational awareness via a vehicle-based display system configured for displaying map-based charts to a user is disclosed. In embodiments, the method comprises displaying, via a primary vehicle-based display, an active panel of an active chart (e.g., enroute chart, avionics chart, other map-based chart), the active chart comprising a sequence of component panels and conveying a geographic information set (e.g., each component panel representing a subset thereof). The method includes activating, via a panel selector toggle within the primary display, a panel selector display, e.g., a thumbnail display of the full active chart but comprising a subset of geographical detail. The method includes dividing the thumbnail display into a sequence of component panels similar to the active chart. The method includes displaying an indicator within the thumbnail display of the panel corresponding to the currently displayed active panel. The method includes displaying, within the thumbnail display, an ownship indicator showing the relationship of the position of the aircraft or vehicle relative to the active chart.

In some embodiments, the method includes displaying, within the thumbnail display, a cursor allowing the user to select a panel from the thumbnail display and displaying an indicator of the panel selected by the user.

In some embodiments, the method includes designating the panel of the active chart corresponding to the selected panel as the new active panel, and displaying the new active panel in the primary display.

In some embodiments, the method includes displaying the ownship indicator as an icon approximating a current position of the aircraft or vehicle within the territory corresponding to the active chart.

In some embodiments, the current position of the aircraft or vehicle is not within the territory corresponding to the active chart, and the method includes displaying the ownship indicator as one or more of 1) an icon "parked" on an edge of the thumbnail display consistent with the position of the vehicle relative to the active chart, or 2) an icon colored, shaded, textured or otherwise indicative of the ownship position off the active chart.

In some embodiments, the method includes rotating the thumbnail display between a horizontal and a vertical orientation (e.g., in unison with a rotation of the primary display).

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a block diagram illustrating an avionics chart display system according to example embodiments of this disclosure;
FIG. 2 is an illustration of an enroute chart selection graphical user interface (GUI) of the chart display system of FIG. 1, including a panel selector;
FIG. 3 is an illustration of the display system of FIG. 1 including a panel selector display;
FIGS. 4A and 4B are detailed views of the panel selector display of FIG. 3;
FIGS. 5A and 5B are detailed views of the panel selector display of FIG. 3, including displayable and non-displayable ownship indicators;
FIG. 6 is an illustration of the display system including panel selector display of FIG. 3 rotated between vertical and horizontal configurations; and
FIGS 7A through 7C are flow diagrams illustrating a method for providing situational awareness via a chart display system according to example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

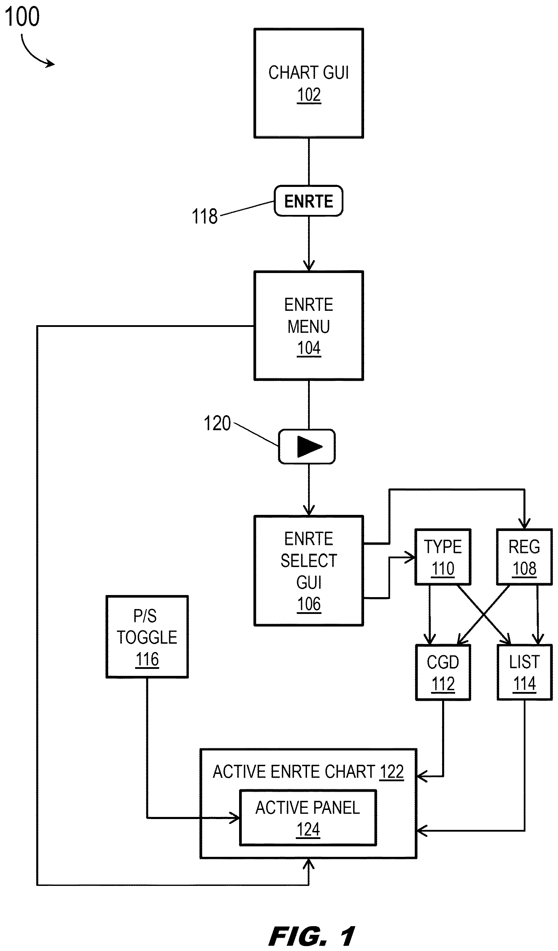

Referring to FIG. 1, a display system 100 for displaying avionics charts (e.g., aeronautical charts) is shown. The display system 100 may include graphical user interface (GUI) 102, main enroute menu 104, enroute selection GUI 106, enroute region selector 108, enroute chart type selector 110, chart graphic display 112, chart selection list 114, and panel selector toggle 116. In embodiments, the display system 100 may be a cockpit display, e.g., primary flight display (PFD), navigational display, electronic flight bag (EFB), or any other display configured for navigation of an aircraft (e.g., ownship) and incorporating a display unit, data storage, and graphics generation processors. In some embodiments, the display system 100 may be embodied in a ground-based or water-based vehicle, and the displayed map-based charts converted from highway maps, terrain maps, littoral maps, riparian maps, or any other appropriate type of map known in the art and convertible into displayable format.

In embodiments, the GUI 102 for selection and display of avionics charts may include an enroute (ENRTE) selector 118 configured for engagement by a user of the GUI (e.g., a pilot or operator). For example, the display system 100 may include a display surface with clickable elements or a touchscreen via which the user may engage directly with elements of the GUI (e.g., by clicking, tapping, dragging, etc.). In embodiments, engagement of the enroute selector 118 by the user may cause the GUI to display the main enroute menu 104, via which the user may be offered several options for selecting an enroute chart for display. In embodiments, each enroute chart listed by the main enroute menu 104 may allow the user to select that enroute chart for display, and may further include a play button 120 via which the user may engage with that particular enroute chart. For example, if the user selects a listed enroute chart for display, that enroute chart is displayed (e.g., and designated the active enroute chart 122).

In some embodiments, each enroute chart may be divided into a sequence of panels. For example, enroute charts may be too large to display at once (e.g., particularly within a flight display or EFB) such that a user may make effective use of the geographical information set contained within the enroute chart (e.g., natural features, manmade landmarks and facilities, potential obstructions, navigational and radionavigational aids). Accordingly, in embodiments enroute charts may be divided into a sequence of panels such that when an enroute chart is selected for display, only a particular panel of the selected enroute chart is displayed in detail. For example, if the selected enroute chart has previously been displayed by the user, the most recently displayed panel of the selected enroute chart may remain the active panel to be displayed if that enroute chart is selected. If, however, a selected enroute chart has not yet been displayed, no active panel may be associated with that enroute chart, and thus the display system 100 may select (e.g., according to software logic) an active panel of the selected enroute chart for display.

In embodiments, engagement with any enroute chart listed by the main enroute menu 104 may cause the GUI 102 to display the selected enroute chart (specifically, an active panel of the selected enroute chart) while engagement with a play button 120 may cause the GUI 102 to display the enroute selection GUI 106. The enroute selection GUI 106 may allow the user to select a geographic region via the enroute region selector 108 and select a chart type via the enroute chart type selector 110. For example, as described in greater detail below, enroute charts may be grouped by the geographic region they collectively portray. Similarly, more than one type of enroute chart (e.g., high-altitude, low-altitude, high/low, area) may be associated with a given region, e.g., if the region in question (or portions thereof) include both high-altitude and low-altitude navigational aids. In embodiments, selection of a geographic region and chart type may configure the chart graphic display 112 and chart selection list 114 to allow selection by the user of all charts associated with a particular region and chart type, respectively by graphic or textual means.

In embodiments, the enroute selection GUI 106 may allow the user to activate or deactivate the panel selector toggle 116, e.g., toggling a panel selector display on or off. For example, the panel selector display may provide enhanced situational awareness by showing the currently displayed active panel 124 of the currently displayed active enroute chart 122 in the context of its associated enroute chart as a whole, and by providing a thumbnail display showing the associated enroute chart and its component panels in their entirety (e.g., as a reduced subset of the full geographical information set conveyed by the enroute chart) allowing the user to select a different or new component panel of the active enroute chart for display.

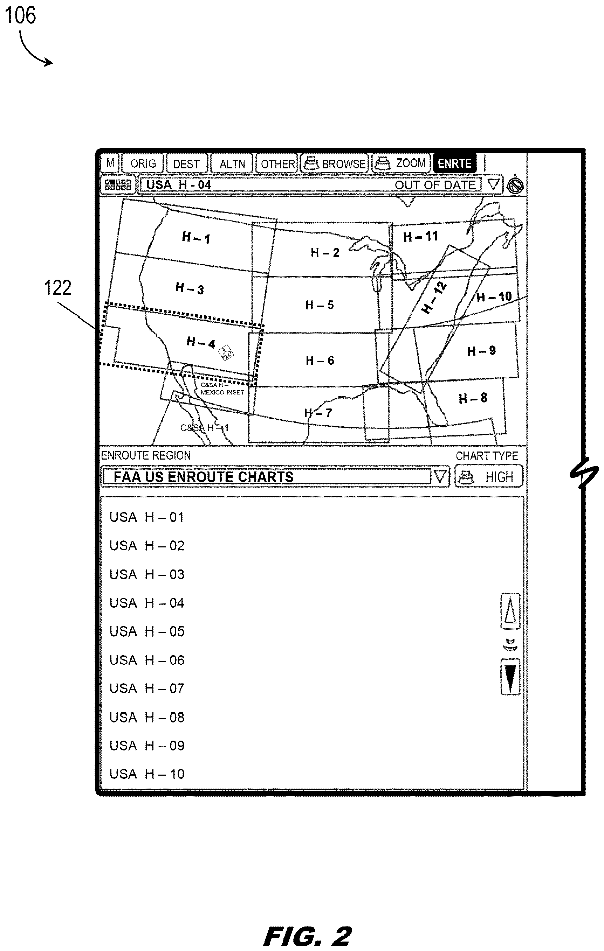

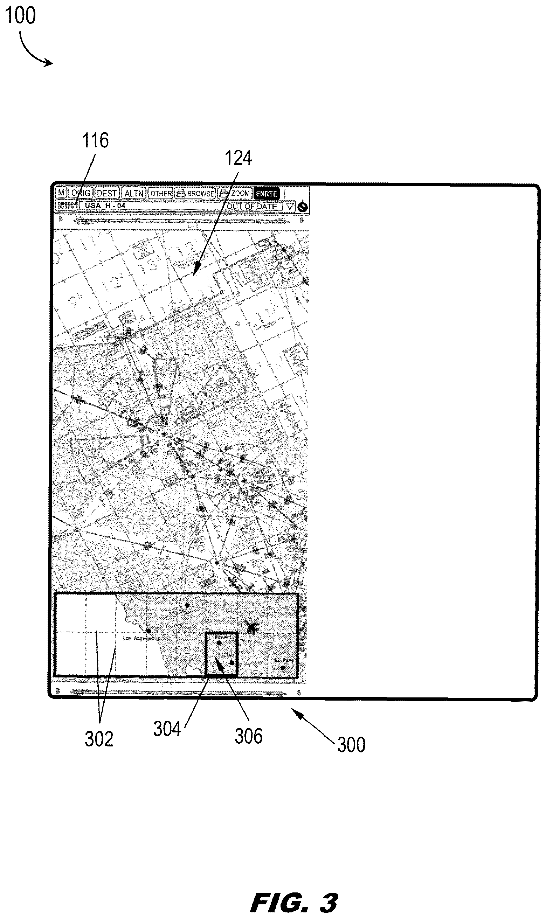

Referring to FIGS. 2 and 3, the enroute selection GUI 106 and display system 100 are respectively shown. The display system 100 may include a panel selector display 300(300, FIG. 3).

In embodiments, the panel selector toggle (116, FIG. 3) may be incorporated by the enroute selection GUI 106 and may be configured for engagement by the user (e.g., via clicking or tapping on a touchscreen surface of the display system 100) the currently displayed active enroute chart (122, FIG. 2). For example, the display system 100 may be a half-panel display showing the enroute selector GUI 106 (as shown by FIG. 2) or the current active panel 124 of the currently displayed active enroute chart 122 (as shown by FIG. 3) in the active half of the display. In embodiments, if an enroute chart designated the active enroute chart 122 has been previously selected or displayed by the display system 100, the most recently displayed active panel of that enroute chart may automatically become the active panel 124. In some cases, an enroute chart designated the active enroute chart 122 (and displayed by the display system 100) may not have been previously selected and/or may not have an associated active panel. If the active enroute chart 122 corresponds to the current position of the aircraft (ownship position), the active panel 124 may be the component panel of the enroute chart including the ownship position. In embodiments, the display system 100 may select an active panel according to software logic.

In embodiments, the panel selector display 300 may be toggled on or off by engagement with the panel selector toggle 116. For example, when toggled on the panel selector display 300 may be superimposed over the currently displayed active panel 124 (e.g., the primary display). In embodiments, the panel selector display 300 may appear along an edge of the display system 100, at a location consistent with the last time the panel selector display was displayed, or at a default location relative to the display system 100 (e.g., a default location selected by the display system to be minimally obtrusive). For example, the panel selector display 300 may be positionable by the user relative to the displayed active panel 124.

In embodiments, the panel selector display 300 may be a thumbnail display corresponding to the current active enroute chart 122. For example, the panel selector display 300 shown by FIG. 3 may correspond to Federal Aviation Administration (FAA) continental United States high altitude chart H - 04 (shown in context by FIG. 2) and may, similar to chart H - 04, portray a section of the southwestern continental United States and northeastern Mexico. In embodiments, the panel selector display 300 may include dividers 302 (e.g., horizontal and/or vertical) separating the thumbnail display into the component panels of the corresponding active enroute chart 122 and an active panel indicator 304304 indicating an active thumbnail panel 306306 corresponding to the currently displayed active panel 124.

In embodiments, the panel selector display 300 may contain a limited subset of the geographical information set contained by the active enroute chart 122 (and by each panel thereof). For example, while the active panel 124 of the current active enroute chart 122 (H - 04) may include extensive high-altitude navigational information for air traffic in and around the international airports of Phoenix and Tucson (e.g., high-altitude waypoints or other navigational aids) the panel selector display 300 may limit the geographical information conveyed by the corresponding active thumbnail panel 306 to the locations of these two major airports relative to the active thumbnail panel (and to the panel selector display 300 as a whole).

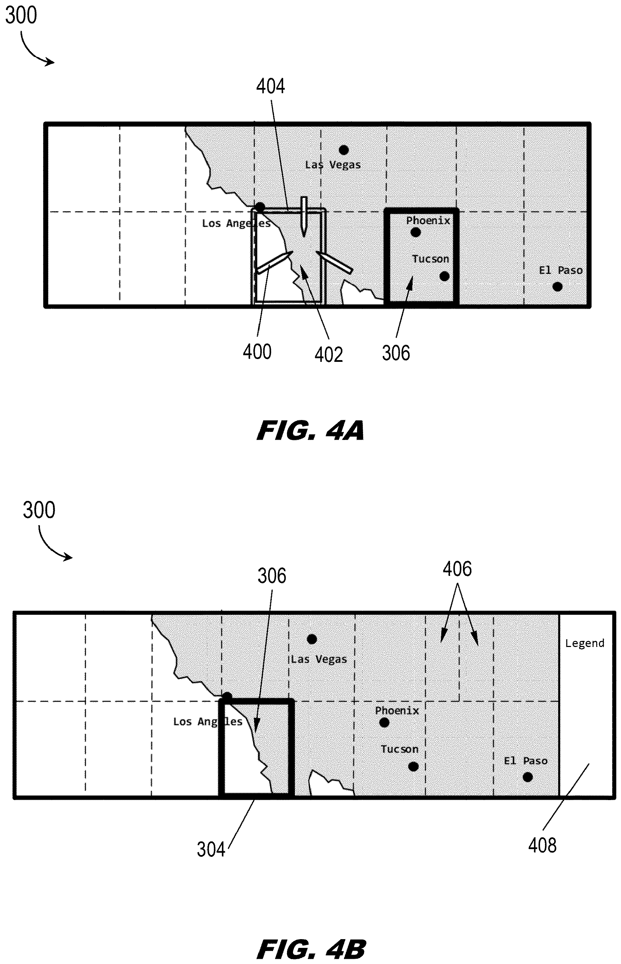

Referring to FIG. 4A, the panel selector display 300 is shown.

In embodiments, the panel selector display 300 may include a cursor 400. For example, the user may toggle the cursor 400 on or off via the display system (100, FIG. 3). By focusing the cursor 400 over a thumbnail panel 402 other than the active thumbnail panel 306 corresponding to the currently displayed active panel (124, FIG. 3), the user may highlight (404) that panel.

In embodiments, the user may select a highlighted thumbnail panel 402 for display, e.g., by clicking or otherwise engaging with the highlighted panel. Referring now to FIG. 4B, the selected highlighted thumbnail panel (402, FIG. 4A) may be designated the new active thumbnail panel 306 by the display system (and the active panel indicator 304 shifted accordingly), and the corresponding panel of the active enroute chart (122, FIG. 2) designated the active panel 124 and displayed by the display system 100, FIG. 3.

In embodiments, referring in particular to FIG. 4B, the panel selector display 300 may incorporate variably sized thumbnail panels 406. For example, if certain panels within an enroute chart include too much geographical information to effectively display at standard panel size, a standard-size panel may be fragmented into several panels of nonstandard size; the variably sized thumbnail panels 406 of the panel selector display 300 may alert the user to nonstandard panels and allow the user to select for display variably sized thumbnail panels corresponding more precisely to the panels of the enroute chart including the desired map information. Similarly, in embodiments the panel selector display 300 may incorporate a legend 408 into a side panel adjacent to the thumbnail display proper. For example, the legend 408 may explain or decode symbology or terminology used by the displayed active panel 124 and/or active enroute chart 122.

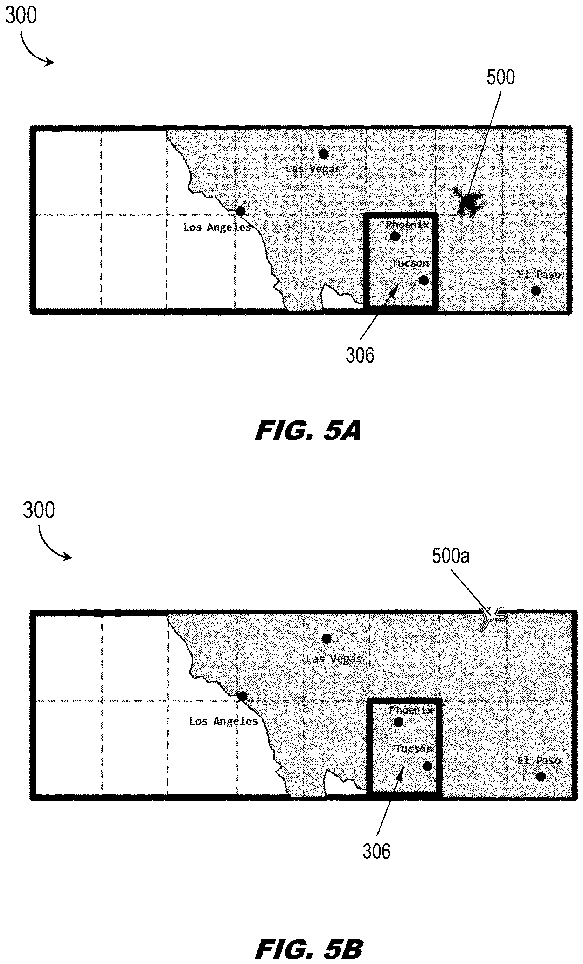

Referring to FIG. 5A, the panel selector display 300 is shown.

In embodiments, the panel selector display 300 may include an ownship indicator 500. For example, the display system (100, FIG. 1) may be in communication with positioning sensors or systems aboard the aircraft. If the current position of the aircraft (e.g., ownship position) is within the current active enroute chart (122, FIG. 3), the thumbnail display corresponding to the active enroute chart may indicate the approximate ownship position and/or heading via the ownship indicator 500. In embodiments, the ownship indicator 500 may not be intended as a navigational aid (e.g., the accuracy of the ownship indicator in showing the precise ownship position/heading may be limited by the scale of the panel selector display 300), but may provide situational awareness of the position of the aircraft relative to other landmarks or features shown by the panel selector display. For example, the panel selector display 300 may include the ownship indicator 500 even if the ownship position is not within the currently active panel (124, FIG. 3) corresponding to the active thumbnail panel 306. In embodiments, the display system 100 may update the position and/or orientation of the ownship indicator 500 as the current position and/or heading of the aircraft changes.

Referring now to FIG. 5B, in embodiments the panel selector display 300 may include a non-displayable ownship indicator 500a. For example, the current position of the aircraft may not be within the active enroute chart (122, FIG. 2). Accordingly, the display system 100 may not be able to place an ownship indicator (500, FIG. 5A) within the corresponding thumbnail display. In embodiments, the display system 100 may situate the non-displayable ownship indicator 500a on an edge of the thumbnail display to convey an approximate position and/or heading of the aircraft relative to the active enroute chart 122 (e.g., to the north-northeast of the region portrayed by the active enroute chart, on a heading of approximately 235 degrees, or roughly south-southwesterly). In some embodiments, the non-displayable ownship indicator 500a may be colored or shaded differently than the ownship indicator 500 to indicate at a glance that the ownship position is not within the current active enroute chart 122.

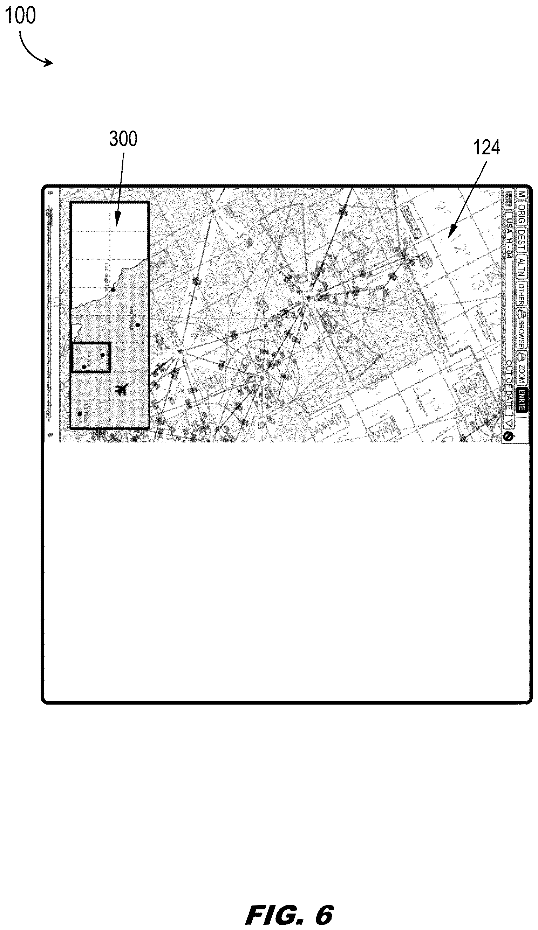

Referring now to FIG. 6, the display system 100 is shown.

In some embodiments, the panel selector display 300 may be rotated between horizontal and vertical configurations. For example, the display system 100 as shown by FIG. 3 may be rotated 90 degrees, resulting in the display system 100 as shown by FIG. 5 (e.g., such that the active panel 124 occupies a horizontal rather than vertical section of the display system). In embodiments, the panel selector display 300 may automatically rotate in response to, and in concert with, a rotation of the display system 100 between vertical and horizontal configurations.

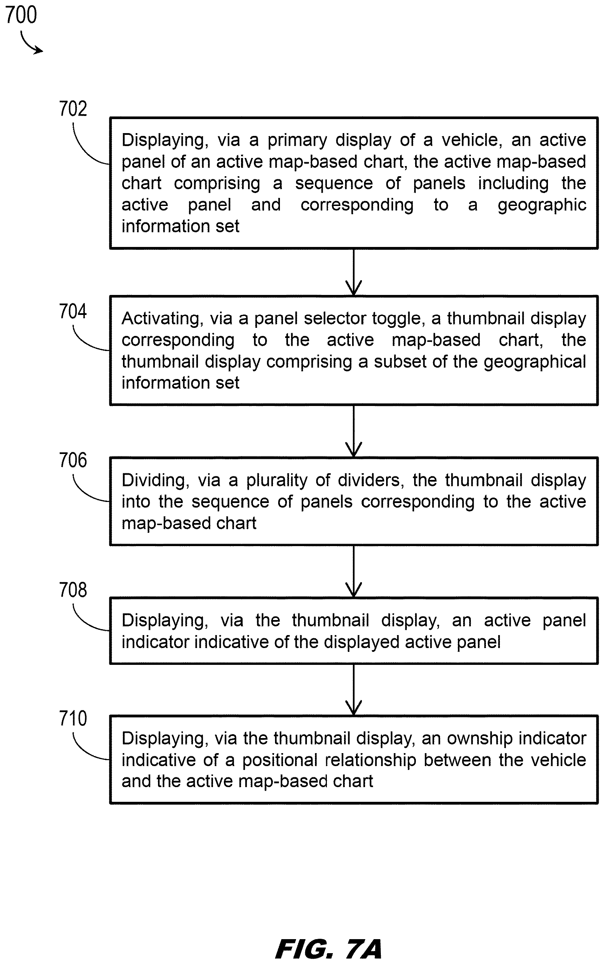

Referring now to FIG. 7A, the method 700 may be implemented by the vehicle-based display system 100, and may include the following steps.

At a step 702, the display system displays, as a primary display, an active panel of an active map-based chart (e.g., enroute chart, avionics chart, other map-based chart). The active enroute chart comprises a sequence of adjacent panels (including the active panel) and contains a geographic information set (e.g., navigational and/or radionavigational aids corresponding to the portrayed geographic region).

At a step 704, the user activates (e.g., via a panel selector toggle) a panel selector display, e.g., a thumbnail display corresponding to the currently active enroute chart superimposed over the primary display. The thumbnail display includes a subset of the geographical information set contained by the corresponding active enroute chart.

At a step 706, the panel selector display divides the thumbnail display into a sequence of thumbnail panels corresponding to the sequence of adjacent panels via a series of dividers.

At a step 708, the panel selector display provides an active panel indicator highlighting the current active panel displayed by the primary display.

At a step 710, the panel selector display provides an ownship indicator indicative of the position of the vehicle relative to the current enroute chart.

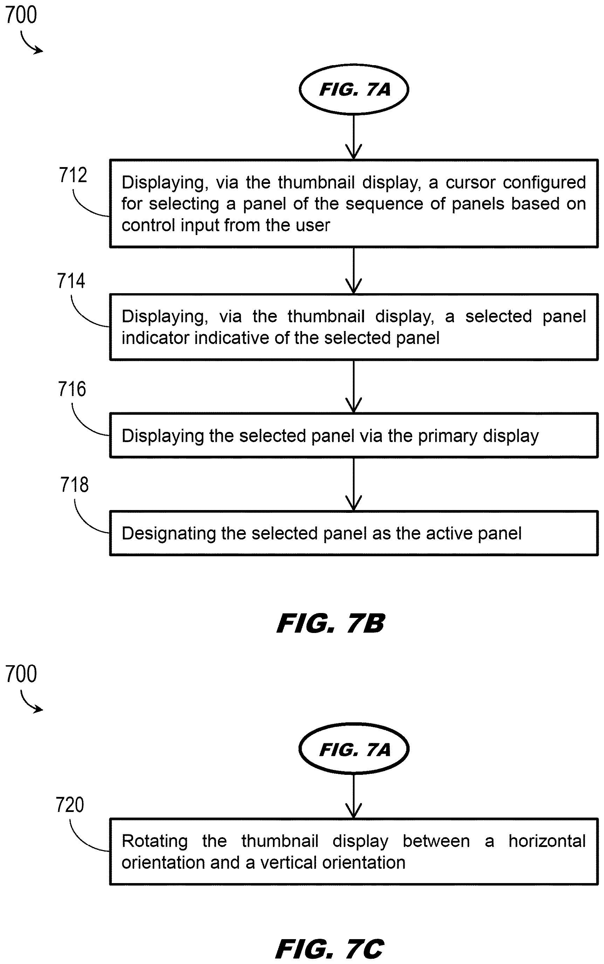

Referring now to FIG. 7B, the method 700 may include additional steps 712 through 718. At the step 712, the panel selector display provides a cursor for highlighting a panel of the thumbnail display, e.g., based on control input provided by a user.

At a step 714, the panel selector display provides a selected panel indicator indicative of the highlighted panel.

At a step 716, when the highlighted panel is selected by the user for display (e.g., based on additional engagement with the highlighted panel), the display system switches the displayed active panel from the currently active panel to the selected highlighted panel.

At the step 718, the display system designates the selected highlighted panel as the new currently active panel.

Referring now to FIG. 7C, the method 700 may include another step 720. At the step 720, the panel selector display rotates between a horizontal configuration and a vertical configuration (e.g., in response to, and in concert with, a rotation of the primary display).

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A vehicle-based display system configured for display of map-based charts, comprising a display unit in communication with a positioning system of a vehicle, the display unit configured to:
receive control input from a user of the vehicle;
display, in a primary display, an active panel (124) of an active map-based chart (122), the active map-based chart comprising a sequence of panels and corresponding to a geographical information set, the primary display including a panel selector toggle (116) configured to activate or deactivate a panel selector display in response to the received control input;
in response to an activation of the panel selector display (300), superimpose the panel selector display over the primary display, the panel selector display comprising:
a thumbnail display corresponding to the active map-based chart, the thumbnail display including a subset of the geographical information set;
a plurality of dividers configured for dividing the thumbnail display into the sequence of panels corresponding to the active map-based chart;
an active panel indicator indicative of the active panel;
and
an ownship indicator indicative of a positional relationship between the vehicle and the active map-based chart.

2. The vehicle-based display system of Claim 1, wherein the panel selector display is positionable relative to the primary display in response to the received control input.

3. The vehicle-based display system of Claim 1 or 2, wherein the panel selector display comprises:
a cursor configured for selecting a panel of the sequence of panels based on control input from the user;
and
a selected panel indicator indicative of the selected panel.

4. The vehicle-based display system of Claim 3, wherein the panel selector display is configured to, responsive to the received control input:
display the selected panel via the primary display;
and
designate the selected panel as the active panel.

5. The vehicle-based display system of any preceding Claim, wherein the ownship indicator includes an icon superimposed on the thumbnail display, the icon corresponding to a current position of the vehicle.

6. The vehicle-based display system of any preceding Claim, wherein:
the vehicle is associated with a current position not displayable within the thumbnail display;
and
the ownship indicator includes at least one of:
an icon disposed on an edge of the thumbnail display consistent with the current position;
or
an icon colored or shaded to indicate the current position outside the thumbnail display.

7. The vehicle -based display system of any preceding Claim, wherein the panel selector display is configured to, responsive to the received control input, rotate the panel selector display between a horizontal configuration and a vertical configuration.

8. A method for providing situational awareness via a vehicle-based display system configured for displaying map-based charts to a user, the method comprising:
displaying, via a primary display of a vehicle, an active panel of an active map-based chart, the active map-based chart comprising a sequence of panels and corresponding to a geographic information set;
activating, via a panel selector toggle, a thumbnail display corresponding to the active map-based chart, the thumbnail display comprising a subset of the geographical information set;
dividing, via a plurality of dividers, the thumbnail display into the sequence of panels corresponding to the active map-based chart;
displaying, via the thumbnail display, an active panel indicator indicative of the displayed active panel;
and
displaying, via the thumbnail display, an ownship indicator indicative of a positional relationship between the vehicle and the active map-based chart.

9. The method of Claim 8, further comprising:
displaying, via the thumbnail display, a cursor configured for selecting a panel of the sequence of panels based on control input from the user;
and
displaying, via the thumbnail display, a selected panel indicator indicative of the selected panel.

10. The method of Claim 9, further comprising:
displaying the selected panel via the primary display;
and
designating the selected panel as the active panel.

11. The method of Claim 8, 9 or 10, wherein displaying, via the thumbnail display, an ownship indicator indicative of a positional relationship between the vehicle and the active map-based chart includes:
displaying, via the thumbnail display, an icon corresponding to a current position of the vehicle.

12. The method of any of Claims 8 to 11, wherein the vehicle is associated with a current position not displayable within the thumbnail display, and wherein displaying, via the thumbnail display, an ownship indicator indicative of a positional relationship between the vehicle and the active map-based chart includes:
displaying an icon disposed on an edge of the thumbnail display consistent with the current position of the vehicle.

13. The method of any of Claims 8 to 12, wherein the vehicle is associated with a current position not displayable within the thumbnail display, and wherein displaying, via the thumbnail display, an ownship indicator indicative of a positional relationship between the vehicle and the active map-based chart includes:
displaying an icon shaded or colored to indicate a current position of the vehicle not displayable within the thumbnail display.

14. The method of any of Claims 8 to 13, further comprising:
rotating the panel selector display between a horizontal orientation and a vertical orientation.
